# EUROPEAN PATENT SPECIFICATION

(11) **EP 1 776 061 B1**
(45) Date of publication and mention of the grant of the patent: **01.08.2012**
(21) Application number: 05758361.9
(22) Date of filing: 15.06.2005
(51) Int. Cl.: A61C 7/08, A61C 9/00, B29C 51/02, B29C 69/02

(54) **Plastic sheets for thermoforming dental products**
Plastikfolien für die thermische Formung von Dentalprodukten
Feuilles de plastique pour le thermoformage de produits dentaires

(30) Priority: 18.06.2004 US 581119 P; 17.11.2004 US 628812 P
(43) Date of publication of application: 25.04.2007
(73) Proprietor: DENTSPLY International Inc., York, PA 17405-0872 (US)
(72) Inventor: ANDERSON, Michael, C., Palmetto, Fl 34221 (US); BOZMAN, John, F., Bradenton, FL 34209 (US)
(74) Representative: Hartz, Nikolai
(86) International application number: PCT/US2005/021167
(87) International publication number: WO 2006/009745

(56) References cited:
- FR-A- 2 763 238
- US-A- 3 682 571
- US-A- 6 082 995
- US-A1- 2004 038 171
- US-B1- 6 524 101

## Description

### Technical Field

The present invention generally relates to thermoforming objects from plastic sheets of material. The invention has particular application to the thermoforming dental products such as dental trays.

### Background of the Invention

Plastic sheets for dental devices have been used for decades see US 3682571, US 6524101, US 6082995 and US 20040038171. They are heated by a number of means including using an electric grid and then when lowered to a dental model, a vacuum draws the plastic precisely to the model of the teeth. Indications for use include for example, indirect bonding of orthodontic appliances, orthodontic retainers, mouth guards for sports, and aligners for correcting minor malocclusions, and other dental trays, splints and appliances. One of the biggest drawbacks with the known art is that as that the plastic thins as it is stretched over the plaster or stone model of the teeth causing it to fail more quickly, either in occlusion or because of the vacuum force drawing so hard at the outset. This failure can cause hours of extra labor to create a new device, as for example, the teeth may have moved since the last impression was taken and the model made, and the doctor or lab must go through the whole process again. Also, it delays the treatment and can lead to relapse if the patient doesn't return immediately. Generally, the sheets to be formed are made with a medical grade plastic that severely limits the range of plastic choices. A need exists to correct these problems.

### Description of the Drawings

Figure 1 shows the round sheet of plastic with the three dimensional form. This form is designed to work with advanced thermoforming equipment such as the BioStar or Drufamat. With even thickness and the arch partially formed, it allows less than half the distortion as flat sheets experience.

Figure 2 shows the application in a square sheet configuration design to be used with the Raintree Essix manual system thermoformer. Again, the formed target area has uniform thickness while being in 3D.

Figure 3 shows the plastic as it heated to the desired temperature. Unlike conventional plastic, it flattens rather than slumps greatly reducing the stretching experience with the current sheets available and increasing its wear toughness.

Figure 4 shows the invention with sheet centered over the target mold for vacuum.

Figure 5 shows a formed tray that can be made without chill spray, reducing the cost of fabrication.

### Brief Summary of the Invention

The present invention provides a solution to the above noted problems with conventional thermoforming:
1. Varying the thickness in the area that is stretched over the model so that when it thins it becomes more uniform in thickness.
2. Making the plastic uniform in thickness but preforming a 3D area that partially builds in part of the area that would be stretched so that it thins much less than a flat sheet.
3. Doing both in accordance with the present invention so that the average draw keeps the thickness after forming nearly uniform.

### Detailed Description of the Invention

It is known in the dental profession that there are two main plastics available that have good thermoforming forming characteristics. One, polystyrene, has excellent clarity and stiffness but poor wear resistance. The other, polyvinylchloride (PVC) has much greater wear resistance but is cloudy after forming and is therefore, less aesthetic. These materials are available for example, from Raintree Essix of Metairie, LA and Great Lakes in Buffalo NY. It is also known to employ desktop thermoforming machines, such as the BioStar and the Raintree Essix. One is a digital solution and the other analog, respectively.

In a conventional thermoforming procedure, the dental professional takes an alginate impression of the patient's malocclusion. The impression is then filled with stone or plastic to make a positive model of the dentition. Depending on the thermoformer employed, a rectangular or round sheet of plastic, from 0,53 cm (.020") to 1.05 cm (.040)" thick, is mounted in the chamber. The model is placed in the bed, the bottom of which is a vacuum chamber. At the top is a heating coil. When the machine has reached its ideal temperature, it heats the plastic until it slumps and then lays the slumped plastic over the model. The vacuum turns on and pulls the plastic tight over the plaster model so it becomes a negative of the positive model. As discussed in U.S. Pat. No. 6,371,759 a chill spray may be used to quickly set the form so it doesn't begin to plastically deform during the cooling process.

The problem with such conventional techniques that the plastic deforms often as much as 2" (the symbol " meaning inches) deep over the area where the model was, which is an area of about 18.4cm (7") by 2.0cm (¾"). Since the plastic had a fixed thickness to start, it has thinned to as much as 50% (percent by area) its original thickness. Many have tried to solve this by going to the stronger PVC material but some patients are uncomfortable with its aesthetics and it doesn't have the spring or resilience of PS. Others have tried thicker original sheets but the thicker sheets lose the spring characteristic along the edges that help hold the plastic in the mouth. Also, it can be too thick in areas where there is less stretch, such as lower anteriors, and disrupt the bite, creating an overbite.

The present invention offers the following solution.
1. Varying the thickness in the area that is stretched over the model so that when it thins it becomes more uniform in thickness.
2. Making the plastic uniform in thickness but preforming a 3D area that partially builds in part of the area that would be stretched so that it thins much less than a flat sheet.
3. Doing both in accordance with the present invention so that the average draw keeps the thickness after forming nearly uniform.

By varying the thickness to improve wear resistance; the plastic is extruded instead of rolled so that one can vary the thickness by area of the sheets. Extruding machines are known to be capable of working easily with polystyrene plastics. The PVC would be unnecessary, as the higher translucency of polystyrene would be most desired by the patient while the wear resistance would be ideal.

The next solution works for both plastics by creating as the sheet is extruded, a 3-D area about 1,3cm (½") to 4.0cm (1.5") that is preformed in the shape of a wide arch so that during forming, the plastic will be stretched less than 50%. This concept has been tested at Glenroe Technologies and they have found less than 25% loss of thickness. This means a thinner plastic can be used, creating less overbite at the end of treatment and less mid-treatment emergency visits when the tray fails. While the invention is exemplified herein with respect the preform being in the shape of a dental arch, it will be appreciated that any portion of the naturally occurring or artificial dental structure that are found in a patient's oral cavity can be preformed, including appliances, restorations and the like. All preformed complex or 3D profiles in the general shape of such natural or artificial elements, are within the scope of the term preformed dentition structure. It is also within the scope of the invention to fabricate reforms in general sizes for patients based upon dental averages.

Further, using a combined extrusion and stamping process, the first two processes can be combined to produce an ideal sheet that is thicker in the area of 3D preforming. While this process will be more expensive, it allows greater security for the dental professional and the patient that treatment results will be realized without failure, even if just used as a retainer. Surveys show that 25% of retainers and all activators are made this way and it is estimated that 3 million are made each year worldwide.

It is already known that an arch is between 14.5cm (5.5") and 18.4cm (7") long, that it is no more than 1.5 cm deep, and the sheet sizes for the varied machines is well documented. It is then just a matter of creating the 3D sheets in the prescribed area of the sheet where the activation will typically occur. Testing has shown that rather than slumping, the plastic will flatten when ready and hit the model at its dictated thickness.

Many dental professionals form several plastic appliances at the same time should there be a failure at the onset. In a sense, much of this is futile as if it is used as an active appliance, the teeth will have moved during the term. For retainers, this is acceptable but eliminating this duplication can save many millions of dollars in labor and plastic.

More importantly, makers of active appliances, such as Align Technologies InvisAlign, rely on the aligners to be durable enough to make it through the phase of treatment that they have programmed. If an aligner fails, then the patient must return to the doctor, who will have to take a progress impression and model, and it will have to be sent in for a mid course correction and reanalyzed by the computers in order to make a new *complete set of trays.* Although the doctor is insured to a limited amount of corrections, it takes a lot of time and can lead to longer treatment of the patient, many times months longer. The doctor and InvisAlign cannot increase their fees so it is a loss to them, and the patient will be frustrated with the relapse and increased treatment time.

This application is limit to discomfort of failed treatment, lower the cost to doctors and labs, and promote better results and prosperity for all involved.

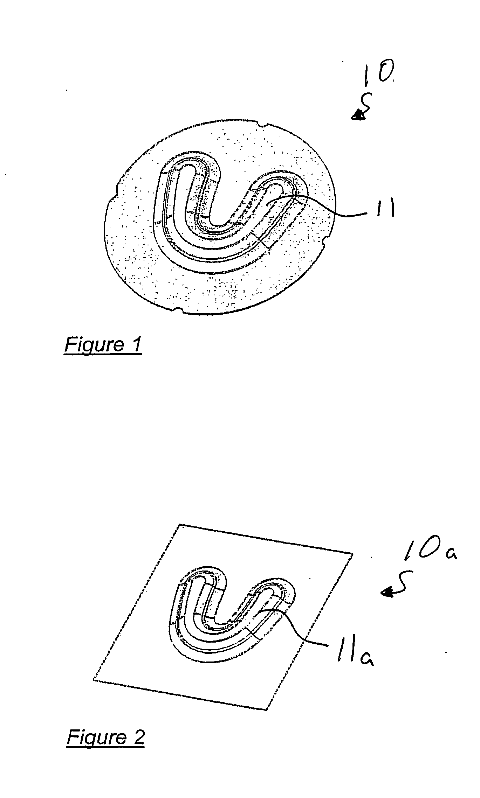

Therefore, as shown in Figure 1, there is provided according to the invention, a preformed sheet of material 10 The sheet 10 shown in Figure 1 is round as is useful in conventional thermoforming equipment that employ round sheets. Figure 2 shows a similar preformed sheet 10a having partially formed arch 11 a but which is square to be used in commercially available thermoforming equipment employing square sheets.

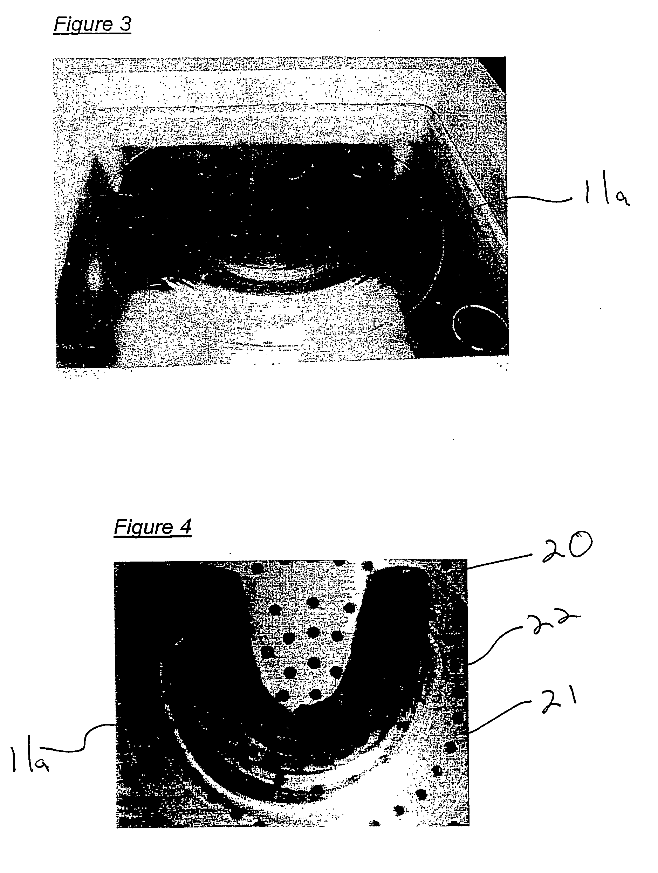

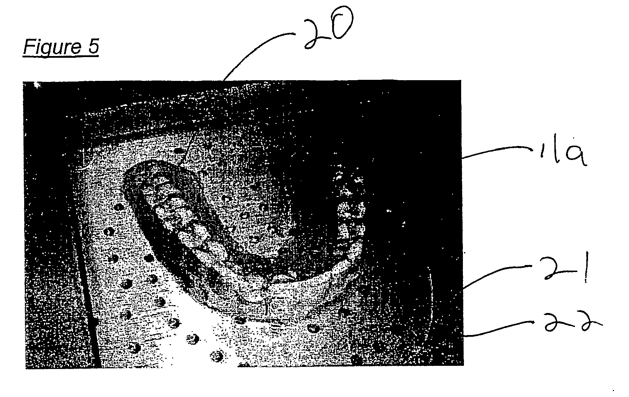

As shown in Figure 3, the sheets according to the present invention flattens when heated, rather than slumping as with conventional materials. Figure 4 shows a dental model 20 in place on a thermoforming machine platen 21 having holes 22 through which a vacuum is drawn in a conventional manner. Heated sheet a is placed over model 20 and a vacuum is drawn. The sheet 11a is thus drawn over model 20 as is shown in Fig. 5.

It will be appreciated therefore, that the thermoforming of devices such as dental trays or the like is advantageously improved by practice of the invention as described herein. It will be appreciated that the invention has been exemplified herein and on the attached drawings without attempting to show all variations that are within the scope thereof. Such scope shall only be determined with reference to the attached claims.

## Claims

1. A polystyrene plastic sheet for thermoforming of dental devices in a desktop thermoforming machine under vacuum, **characterised in** said sheet having at least two areas of different thickness to compensate for slump during thermoforming, wherein at least one area is more resilient than at least one other area of the sheet (10, 10a), wherein the plastic sheet (10, 10a) comprises a preformed dentition structure

## Patentansprüche

1. Polystyrolplastikfolie zum Warmformen von Dentalvorrichtungen in einer Tisch-Warmformmaschine unter Vakuum, **gekennzeichnet dadurch, dass** die Folie mindestens zwei Bereiche unterschiedlicher Stärke aufweist, um einen Rückgang während des Warmformens zu kompensieren, wobei mindestens ein Bereich elastischer ist als mindestens ein weiterer Bereich der Folie (10, 10a), wobei die Plastikfolie (10, 10a) eine vorgeformte Dentitionsstruktur umfasst.

## Revendications

1. Feuille de matière plastique en polystyrène pour le thermoformage de dispositifs dentaires dans une machine de thermoformage de table sous vide, ladite feuille étant **caractérisée en ce qu'**elle comporte au moins deux zones d'épaisseur différente pour compenser l'affaissement au cours du thermoformage, dans laquelle au moins une zone est plus résiliente qu'au moins une autre zone de la feuille (10, 10a), ladite feuille de matière plastique (10, 10a) comprenant une structure de dentition préformée.
